# EUROPÄISCHE PATENTSCHRIFT

(11) **EP 1 000 811 B1**
(45) Veröffentlichungstag und Bekanntmachung des Hinweises auf die Patenterteilung: **31.08.2005**
(21) Anmeldenummer: 99122185.4
(22) Anmeldetag: 06.11.1999
(51) Int. Cl.: B60R 16/02, G01R 31/36, H02H 7/18

(54) **Steuergerät für ein Kraftfahrzeug**
Control device for a motor vehicle
Appareil de commande pour un véhicule à moteur

(30) Priorität: 09.11.1998 DE 19851577
(43) Veröffentlichungstag der Anmeldung: 17.05.2000
(73) Patentinhaber: AUDI AG, 85045 Ingolstadt (DE)
(72) Erfinder: Bois, Wilhelm, 85080 Gaimersheim (DE)

(56) Entgegenhaltungen:
- DE-A- 4 418 538
- FR-A- 2 713 570
- US-A- 3 646 354
- US-A- 4 243 248
- US-A- 4 864 154
- US-A- 4 950 913
- US-A- 5 332 958
- US-A- 5 563 452

## Beschreibung

Die Erfindung betrifft ein Steuergerät für ein Kraftfahrzeug.

Normalerweise liegt zwischen der Produktion eines Kraftfahrzeuges und der Kundenauslieferung ein mehr oder weniger langer Zeitraum. In der Regel müssen die Fahrzeuge erst zum Händler transportiert werden, der die Auslieferung vor Ort vornimmt. Die Überführung zum Händler erfolgt per Schiff, Bahn oder LKW. Bei einer Überseeüberführung kann der Transport mehrere Tage in Anspruch nehmen. Häufig stehen die Fahrzeuge auch beim Händler noch einen gewissen Zeitraum. Es besteht aber auch die Möglichkeit, daß die Fahrzeuge direkt ab Werk ausgeliefert werden.

Da die Fahrzeuge zum Beladen der jeweiligen Transportmittel bzw. zum Erreichen eines Werkstellplatzes in Betrieb genommen werden müssen, ist es nicht ausgeschlossen, daß Fahrzeugverbraucher wie z.B. Radio, Beleuchtungseinrichtungen, etc. versehentlich nicht ordnungsgemäß ausgeschaltet werden. Bleibt dieser Zustand unbemerkt, so kann es auch bei leistungsschwachen Verbrauchern aufgrund des langen Zeitraumes zu einer vollständigen Entladung der Fahrzeugbatterie kommen. Ein Starten eines Fahrzeuges nach einer derartigen Entladung der Fahrzeugbatterie ist nicht mehr möglich. Dadurch kann sich das Be- bzw. Entladen des Transportmittels erheblich verzögern, da das Fahrzeug entweder von Hand verschoben oder eine Starthilfe gegeben werden muss.

Äußerst störend ist es auch, wenn das unbemerkte Entladen der Fahrzeugbatterie beim Händler erfolgt und das Fahrzeug kurzfristig ausgeliefert werden soll. Durch die auftretenden Verzögerungen bemerkt der Kunde direkt oder indirekt, daß Probleme mit seinem Fahrzeug aufgetreten sind. Dies beeinträchtigt in erheblicher Weise das Vertrauen in die Zuverlässigkeit des Fahrzeuges.

Zur Abrundung des Standes der Technik wird auf die DE 33 27 532 A1 verwiesen, die eine Trennschalteinrichtung für Kraftfahrzeuge beschreibt, mit deren Hilfe die Batterie bei Fahrzeugen insbesondere bei längerem Abstellen vom Bordnetz getrennt werden kann, um ein übermäßiges Entladen zu verhindern. Es wird weiter in der DE 197 12 342-A1 gezeigt, wie elektrische Verbraucher eines Kraftfahrzeuges beim Erreichen eines unteren Schwellenwertes der Batteriespannung außer Betrieb gesetzt werden. Schließlich ist es aus der DE 41 37 146-A1 bekannt, elektrische Verbraucher nach Ablauf einer vorgegebenen Zeit automatisch nach dem Abstellen des Antriebsmotors abzuschalten.

Die US-A-4 950 913, die den nächstkommenden Stand der Technik bildet, offenbart einen programmierbaren Zeitschalter für ein Kraftfahrzeug, der zwei Betriebszustände zulässt. Ein erster Betriebszustand wird dahingehend definiert, dass der Motor des Fahrzeuges ausgeschaltet ist. In diesem ersten Betriebszustand begrenzt der Zeitschalter die Spannungsversorgung von Verbrauchern dahingehend, dass er nach einer gewissen Zeit den entsprechenden Verbraucher abschaltet. Der zweite Betriebszustand wird durch Betätigung des Fahrzeugmotors definiert. In diesem zweiten Betriebszustand wird das Zeitschaltsystem zurückgestellt, die Spannungsversorgung des Verbrauchers ist zeitlich nicht begrenzt.

Aufgabe der Erfindung ist es, ein Steuergerät für ein Kraftfahrzeug anzugeben, das die oben genannten Nachteile vermeidet und insbesondere ein vollständiges Entladen der Fahrzeugbatterie während der Überführungsphase vor der endgültigen Kundenauslieferung verhindert.

Gelöst wird diese Aufgabe durch die im Anspruch 1 angegebenen Merkmale.

Vorteilhafte Weiterentwicklungen der Erfindung sind in den Unteransprüchen angegeben.

Die wesentliche Idee der Erfindung besteht darin, bei einem Steuergerät für ein Kraftfahrzeug zwei Betriebszustände vorzusehen, wobei im ersten Betriebszustand die Spannungsversorgung des Verbrauchers zeitlich begrenzt und im zweiten Betriebszustand zeitlich unbegrenzt ist.

Mit Hilfe eines Bedienelements, das mit dem Steuergerät verbunden ist, wird das Steuergerät aufgefordert, die Spannungsversorgung des Fahrzeugverbrauchers herzustellen.

Als Bedienelemente sind manuelle Schalter oder andere Steuergeräte, die z.B. auf Sprachsteuerung reagieren, denkbar. Im folgenden ist als Bedienelement ein manuell betätigbarer Schalter beschrieben. Der manuell betätigbare Schalter bewirkt somit nicht unmittelbar, daß die Spannungsversorgung des Fahrzeugverbrauchers hergestellt wird. Dies wird erst über das Steuergerät durch Ansteuerung eines entsprechenden elektronischen oder mechanischen Spannungsschalters ( Relais, MOS-FET etc.) erreicht.

Da die Spannungsversorgung des Fahrzeugverbrauchers zeitlich begrenzt ist, kann es durch einen versehentlich eingeschalteten Verbraucher nicht zu einer vollständigen Entladung der Fahrzeugbatterie kommen. Spätestens nach einer vorgegebenen Zeitraum wird der Verbraucher abgeschaltet. Da während des gesamten Transports vom Werk zum Händler einschließlich der Verweilzeit beim Händler bzw. im Werk das Fahrzeug nicht länger in Betrieb genommen und bewegt werden muß, kommt es in der Regel nicht zu einer Verbraucherabschaltung.

Falls trotzdem eine Verbraucherabschaltung eintritt, kann diese durch einen erneuten Motorstart behoben werden. Durch den erneuten Motorstart wird die zeitliche Begrenzung wieder zurückgesetzt. Der Verbraucher ist so nach einem Motorstart wieder für einen vorgegebenen Zeitraum einsetzbar.

Da dieser erste Betriebszustand nur während des Transports aufrechterhalten werden muß, ist in einem zweiten Betriebszustand keine zeitliche Beschränkung der Stromversorgung mehr vorgesehen.

Erfindungsgemäß erfolgt das Umschalten zwischen den beiden Betriebszuständen mit Hilfe eines Diagnosegerätes. Derartige Diagnosegeräte werden bereits häufig in Kundendienstwerkstätten eingesetzt, um z.B. Fehlerspeicher in Motorsteuergeräten auszulesen. Somit kann kurz vor Übergabe des Fahrzeuges an den Kunden mit Hilfe eines solchen Diagnosegerätes der Betriebszustand des Steuergeräts einfach und schnell geändert werden.

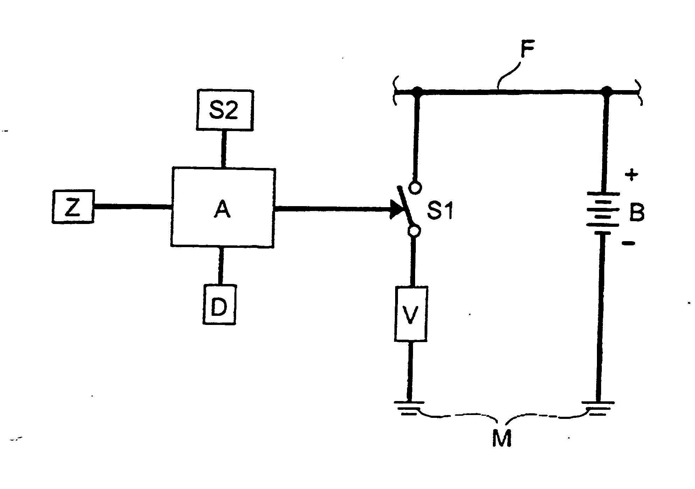

Nachfolgend ist die Erfindung anhand eines in der Zeichnung dargestellten Ausführungsbeispiels näher erläutert.

Ein Steuergerät A ist mit einem Spannungsschalter S1 (Relais, MOS-FET etc.), das die Spannungsversorgung eines Verbrauchers V in einem nicht näher dargestellten Kraftfahrzeug regelt, verbunden. Der Spannungsschalter S1 ist zwischen einem Fahrzeugbatterieanschluß F und dem an der Fahrzeugmasse M Liegenden Verbrauder V angeordnet. Die Spannung am Fahrzeugbatterieanschluß F liefert eine Fahrzeugbatterie B. Je nach Stellung des Spannungsschalters S1 ist der Verbraucher V ein- bzw. ausgeschaltet.

Das Steuergerät A ist außerdem mit einem Schalter S2 zum Schalten des Verbrauchers V, mit einem Diagnoseanschluß D und einer Startsignalerkennungseinheit Z verbunden.

Nachfolgend ist die Funktionsweise der Erfindung näher erläutert.
Ist der Verbraucher V nicht eingeschaltet und soll dieser in Betrieb genommen werden, so muß der Schalter S2 betätigt (z.B. geschlossen) werden. Diese Betätigung wird vom Steuergerät A erfaßt. Das Steuergerät A steuert daraufhin den Spannungsschalter S1 so an, daß der Stromkreis geschlossen wird. Durch das Einschalten des Fahrzeugverbrauchers V wird die Fahrzeugbatterie B belastet.

Das Abschalten des Fahrzeugverbrauchers V kann in unterschiedlicher Weise erfolgen, je nach dem in welchem Betriebszustand sich das Steuergerät A befindet.

Befindet sich das Steuergerät A in seinem Normalzustand (zweiter Betriebszustand), so erfolgt das Abschalten des Fahrzeugverbrauchers V nur durch erneutes Betätigen des Schalters S2. Das Steuergerät A steuert daraufhin der Spannungsschalter S1 so an, daß der Stromkreis geöffnet wird.

Befindet sich das Steuergerät A jedoch im Anfangszustand (erster Betriebszustand), so ergeben sich zwei Möglichkeiten des Abschaltens.
Die erste Möglichkeit entspricht der oben beschriebenen. Wird das Abschalten des Fahrzeugverbrauchers gewünscht, so muß der Schalter S2 betätigt werden.

Wurde jedoch die erneute Betätigung des Schalters S2 d.h., das Abschalten des Fahrzeugverbrauchers V "vergessen", so schaltet das Steuergerät A den Fahrzeugverbraucher V nach einem vorgegebenen Zeitraum automatisch durch entsprechende Ansteuerung des Spannungsschalters S1 ab. Bei jedem Einschalten des Fahrzeugverbrauchers V, d.h. bei einer entsprechenden Betätigung des Schalters S2, wird eine Zeitschaltung im Steuergerät A ausgelöst. Beim Erreichen der maximalen Einschaltzeit wird der Fahrzeugverbraucher V automatisch abgeschaltet. Vor dem Erreichen der maximalen Einschaltzeit kann jederzeit ein "manuelles" Abschalten des Fahrzeugverbrauchers V erfolgen.
Durch das automatische Abschalten wird ein vollständiges Entladen der Fahrzeugbatterie verhindert.

Gemäß Anspruch 2 erfolgt die Unterbrechung der Stromversorgung des Verbrauchers V, z.B. nach einer Stunde Einschaltzeit. Damit ist gewährleistet, daß bei einer kurzfristiger Inbetriebnahme des Fahrzeuges, wie sie im Produktionswerk und während der Überführungsphase üblich ist, alle Fahrzeugfunktionen unbeeinflußt wahrgenommen werden können.

Wurde der Fahrzeugverbraucher V versehentlich nicht ausgeschaltet und erfolgte eine automatische Abschaltung durch das Steuergerät A, so ist wünschenswert, daß bei einem erneuten Motorstart alle Fahrzeugfunktionen wieder zur Verfügung stehen.
Erfindungsgemäß ist deshalb vorgesehen, daß das Steuergerät A mit einem Startsignalerkennungseinheit Z verbunden ist, die im Falle der Betätigung z.B. des Zündschlosses des Fahrzeuges, ein entsprechendes Startsignal erzeugt. Erhält das Steuergerät A ein derartiges Startsignal, so wird Einschaltzeit auf 0 zurückgesetzt und der Verbraucher V ist sofort wieder eingeschaltet. In der Regel wird der Benutzer dies unmittelbar nach dem Motorstart bemerken, wenn z.B. das Radiogerät sofort zu hören ist. Dem Benutzer wird dadurch auch bewußt, daß dieser Verbraucher V nicht ausgeschaltet wurde. Was wiederum dazu beiträgt, daß ein erneutes "Vergessen" des Abschaltens mit großer Wahrscheinlichkeit vermieden wird. Falls die Spannungsversorgung des Verbrauchers V nicht spätestens nach z.B. einer Stunde aufgehoben wird, erfolgt wiederum eine Unterbrechung

Neben dem Zündsignal ist auch denkbar, das Motordrehzahlsignal als Startsignal zu verwenden.

Bei dem Verbraucher V kann es sich auch um eine Gruppe von Verbrauchern handeln, z.B. alle Verbraucher im Fahrzeug deren Abschalten beim Verlassen des Fahrzeuges nicht absolut gewährleistet ist.

Erfindungsgemäß ist das Steuergerät A mit einem Diagnoseanschluß D versehen, über den das Steuergerät A mit einem Diagnosetestgerät verbindbar ist, wobei mit Hilfe des Diagnosetestgerätes ein Steuersignal erzeugbar ist, das eine Änderung des Betriebszustandes vom Anfangszustand (erster Betriebszustand) in den Normalzustand (zweiter Betriebszustand) bewirkt. Ein derartiger Diagnosetester ist bei jeder Kundendienstwerkstätte vorhanden und leicht an das entsprechende Fahrzeug anschließbar. Somit kann die Änderung des Betriebszustandes unmittelbar kurz vor der Fahrzeugübergabe an den Kunden beim Händler erfolgen.

## Patentansprüche

1. Steuergerät für ein Kraftfahrzeug, das
mit einem Bedienelement (S2) zum Betätigen eines Verbrauchers (V) und
mit einem Schalter (S1) zur Steuerung der Spannungsversorgung des Verbrauchers (V) verbunden ist, wobei die Steuerung des Schalters (S1) derart erfolgt, dass
das Steuergerät (A) in einem ersten Betriebszustand die Spannungsversorgung des Verbrauchers (V) zeitlich begrenzt, wobei der erste Betriebszustand einen Anfangszustand während einer Überführungsphase des Kraftfahrzeugs und vor einer endgültigen Kundenauslieferung darstellt und das Steuergerät (A) in einem zweiten Betriebszustand die zeitlich unbegrenzte Spannungsversorgung des Verbrauchers (V) gewährleistet, wobei der zweite Betriebszustand einen Normalzustand nach der Auslieferung des Kraftfahrzeugs darstellt und
das Steuergerät (A) einen Diagnoseanschluss (D) aufweist, der mit einem Diagnosetestgerät verbindbar ist, was ein Steuersignal erzeugt, welches eine Änderung des Betriebszustandes von dem Anfangszustand in den Normalzustand des Kraftfahrzeugs bewirkt.

2. Steuergerät nach Anspruch 1, **dadurch gekennzeichnet, dass** die zeitliche Begrenzung im ersten Betriebszustand eine Stunde beträgt.

3. Steuergerät nach einem der vorhergehenden Ansprüche, **dadurch gekennzeichnet, dass** nach jedem Motorstart die ursprüngliche zeitliche Begrenzung wiederhergestellt wird.

## Claims

1. Control device for a motor vehicle, which is connected to an operating control (S2) for operating a consuming device (V) and to a switch (S1) for controlling the power supply to the consuming device (V); control of the switch (S1) being effected such that: the control device (A), in a first operating condition, limits the power supply to the consuming device (V) to a limited time duration, the first operating condition representing an initial condition during a transportation phase of the motor vehicle and up to final delivery to a customer; and the control device (A), in a second operating condition, ensures the power supply to the consuming device (V) for an unlimited time duration; the second operating condition representing a normal condition after delivery of the motor vehicle; and the control device (A) having a diagnostic connection (D) which can be connected to a diagnostic test device that produces a control signal which effects a change in the operating condition of the motor vehicle from the initial condition to the normal condition.

2. Control device according to claim 1, **characterised in that** the limited time duration in the first operating condition amounts to one hour.

3. Control device according to one of the preceding claims, **characterised in that**, after each engine start, the original time duration is restored.

## Revendications

1. Appareil de commande pour un véhicule automobile,
qui est relié à un élément d'actionnement (S2) pour l'activation d'un consommateur (V), et à un commutateur (S1) pour la commande de l'alimentation en tension du consommateur (V), la commande du commutateur (S1) étant effectuée de telle sorte que
dans un premier état de fonctionnement, l'appareil de commande (A) limite dans le temps l'alimentation en tension du consommateur (V), le premier état de fonctionnement étant un état initial pendant une phase de transfert du véhicule automobile et avant une livraison définitive à un client, et l'appareil de commande (A) assurant dans un deuxième état de fonctionnement l'alimentation en tension illimitée dans le temps du consommateur (V), le deuxième état de fonctionnement étant un état normal après la livraison du véhicule automobile, et
l'appareil de commande (A) comportant un raccordement de diagnostic (D) qui peut être relié à un appareil de diagnostic, lequel génère un signal de commande qui provoque une modification de l'état de fonctionnement de l'état initial à l'état normal du véhicule automobile.

2. Appareil de commande selon la revendication 1, **caractérisé en ce que** la limitation dans le temps dans le premier état de fonctionnement dure une heure.

3. Appareil de commande selon l'une des revendications précédentes, **caractérisé en ce que** la limitation initiale dans le temps est rétablie après chaque démarrage de moteur.
